# EUROPEAN PATENT APPLICATION

(11) **EP 4 057 381 A1**
(43) Date of publication of application: **14.09.2022**
(21) Application number: 22160612.2
(22) Date of filing: 07.03.2022
(51) Int. Cl.: H01M 4/131, H01M 4/36, H01M 4/485, H01M 4/505, H01M 4/525, H01M 10/0525

(54) **LITHIUM SECONDARY BATTERY**

(30) Priority: 08.03.2021 KR 20210030180; 11.05.2021 KR 20210060654
(71) Applicant: SK On Co., Ltd., Seoul 03188 (KR)
(72) Inventor: YOO, Kyung Bin, 34124 Daejeon (KR); NOH, Mi Jung, 34124 Daejeon (KR); YOON, Jeong Bae, 34124 Daejeon (KR)
(74) Representative: Stolmár & Partner Patentanwälte PartG mbB

(57) **Abstract**

A lithium secondary battery includes a cathode including a cathode active material, and an anode facing the cathode. The cathode active material includes a lithium composite oxide particle having a nickel molar ratio of 0.8 or more among elements other than lithium and oxygen, and a reversible lithium-titanium oxide selectively present in a charging region of 4.1 V or more and less than 4.3 V. Life-span stability is improved by the reversible lithium-titanium oxide at a high-voltage region.

## Description

### CROSS-REFERENCE TO RELATED APPLICATION AND CLAIM OF PRIORITY

This application claims priority to Korean Patent Applications No. 10-2021-0030180 filed on March 8, 2021 and No. 10-2021-0060654 filed on May 11, 2021 in the Korean Intellectual Property Office (KIPO), the entire disclosure of which is incorporated by reference herein.

### BACKGROUND

### 1. Field

The present invention relates to a lithium secondary battery. More particularly, the present invention relates to a lithium secondary battery including a lithium composite oxide.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, the secondary battery or a battery pack including the same is being developed and applied as an eco-friendly power source of an electric automobile such as a hybrid vehicle.

The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer, and an electrolyte immersing the electrode assembly. The lithium secondary battery may further include an outer case having, e.g., a pouch shape.

A lithium composite oxide may be used as a cathode active material of the lithium secondary battery, and may be preferably developed to have high capacity, high power and improved life-span properties. Accordingly, chemical stability of the lithium composite oxide is required even when charging and discharging are repeatedly performed.

However, when the lithium composite oxide is exposed to an air or reacts with an electrolyte during the use of the battery, life-span and operational stability of the battery may be deteriorated.

For example, Korean Patent Laid-Open No. 10-2017-0093085 discloses a cathode active material including a transition metal compound, which may not provide sufficient stability of the cathode active material.

### SUMMARY

According to an aspect of the present invention, there is provided a lithium secondary battery having improved electrical property and reliability.

A lithium secondary battery according to exemplary embodiments includes a cathode including a cathode active material and an anode facing the cathode. The cathode active material includes a lithium composite oxide particle having a nickel molar ratio of 0.8 or more among elements other than lithium and oxygen, and a reversible lithium-titanium oxide selectively present in a charging region of 4.1 V or more and less than 4.3 V.

In some embodiments, the reversible lithium-titanium oxide may be represented by LiₓTiO₂ (0<x≤0.6).

In some embodiments, the cathode active material may further include TiO₂ particles.

In some embodiments, a content of the TiO₂ particles may be from 1,000 ppm to 5,000 ppm based on a total weight of the lithium composite oxide particle.

In some embodiments, the lithium composite oxide particle may be represented by Chemical Formula 1:

[Chemical Formula 1] Li_{α}NiₓM_{y}O_{β}

In Chemical Formula 1, M is at least one selected from Co, Mn, Ti, Zr, Al and B, 0.7≤α≤1.2, 1.5≤β≤2.02, 0.8≤x≤0.95, and 0.95<x+y ≤1.1.

In some embodiments, the reversible lithium-titanium oxide may be formed on a surface of the lithium composite oxide particle in the charging region.

In some embodiments, the reversible lithium-titanium oxide may be not present at a voltage less than 4.1V.

In some embodiments, the lithium composite oxide particle may contain nickel, cobalt and manganese, and a molar ratio of nickel among nickel, cobalt and manganese may be 0.8 or more.

In some embodiments, an integral peak intensity ratio expressed as PA/PA₀ may be from 1.5 to 2.0. PA represents an integral peak intensity in a range from 460 eV to 470 eV by an sXAS (Soft X-ray adsorption spectroscopy) of the cathode active material including the reversible lithium-titanium oxide and the lithium composite oxide particle. PA₀ represents an integral peak intensity by an sXAS of a cathode active material that consists of the lithium composite oxide particle having the same composition used when measuring PA and does not include a titanium source measured under the same condition used when measuring PA.

In some embodiments, the integral peak intensity ratio may be from 1.6 to 1.95.

In some embodiments, the integral peak intensity in the range from 460 eV to 470 eV by the sXAS of the cathode active material including the reversible lithium-titanium oxide may be from 10 to 14.

In a lithium secondary battery according to exemplary embodiments as described above, a cathode active material including a lithium-titanium oxide that may be reversibly formed in a high voltage charging region may be used. In the high voltage region, lithium residues present on a surface of the cathode active material may be converted into the lithium-titanium oxide, thereby improving structural stability of the cathode active material.

The cathode active material may have a high-Ni composition having a nickel molar ratio of 0.8 or more. High-capacity properties of the lithium secondary battery may be obtained from the high nickel composition, and life-span stability of the lithium secondary battery at high voltage may be improved using a reversible phase of the lithium-titanium oxide.

### BRIEF DESCRIPTION OF THE DRAWINGS

FIG. 1 is a schematic cross-sectional view illustrating a lithium secondary batteries in accordance with exemplary embodiments.
FIG. 2 is a graph showing an sXAS(Soft X-ray absorption spectroscopy) analysis of a cathode active material of Example 6.

### DETAILED DESCRIPTION OF THE EMBODIMENTS

According to embodiments of the present invention, a lithium secondary battery including a lithium composite oxide particle where a lithium-titanium oxide is formed on a surface thereof to have improved capacity and life-span is provided. According to embodiments of the present invention, a method of manufacturing the lithium secondary battery is also provided.

Hereinafter, the present invention will be described in detail with reference to the accompanying experimental examples and drawings. However, those skilled in the art will appreciate that such embodiments described with reference to the accompanying drawings and examples are provided to further understand the spirit of the present invention and do not limit subject matters to be protected as disclosed in the detailed description and appended claims

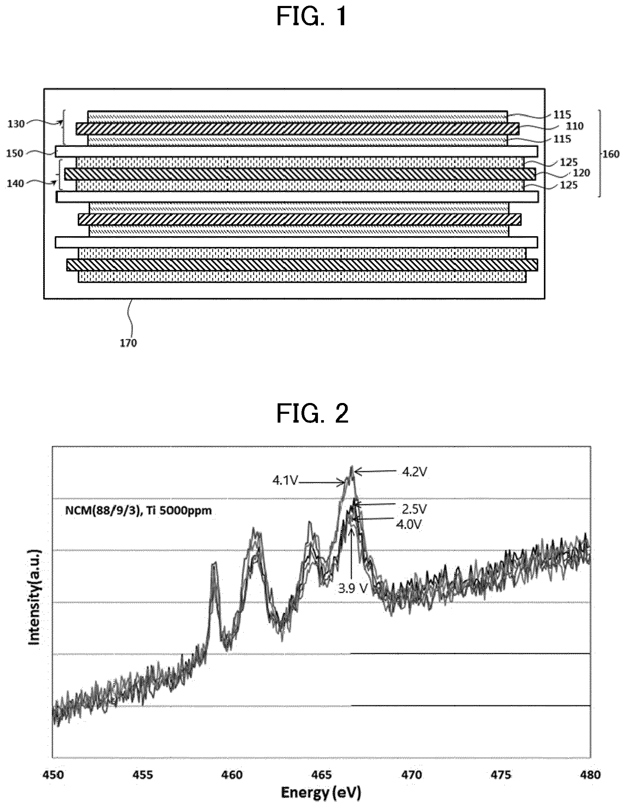

FIG. 1 is a schematic cross-sectional view illustrating a lithium secondary batteries in accordance with exemplary embodiments.

Referring to FIG. 1, a lithium secondary battery may include a cathode 130, an anode 140 and a separation layer 150 interposed between the cathode and the anode.

The cathode 130 may include a cathode current collector 110 and a cathode active material layer 115 formed by coating a cathode active material on the cathode current collector 110.

The cathode active material may include lithium composite oxide particles and a lithium-titanium oxide.

For example, nickel may serve as a metal related to capacity of the lithium secondary battery. As a content of nickel increases, capacity and power of the lithium secondary battery may be improved. However, an excessive content of nickel may be disadvantageous from aspects of life-span, mechanical and electrical stability, etc. For example, if the content of nickel is excessively increased, defects such as ignition and short-circuit may not be sufficiently suppressed when a penetration by an external object occurs. Accordingly, according to exemplary embodiments, manganese (Mn) may be distributed throughout an entire area of the particle to reduce or prevent chemical and mechanical instability caused by nickel.

In exemplary embodiments, the lithium composite oxide particle may include additional elements other than lithium and oxygen, and a mole ratio of nickel among the additional elements may be 0.8 or more. For example, the additional elements may include transition metals including nickel.

The high-Ni composition in which the molar ratio of nickel is 0.8 or more may be employed, so that capacity of the battery may be remarkably improved. Additionally, a lithium-titanium oxide phase may be reversibly formed by reacting the lithium composite oxide particles with TiO₂ particles to be described later within a predetermined charging voltage range.

If the molar ratio of nickel is less than 0.8, the lithium-titanium oxide may not be formed. Further, high-capacity properties of the lithium secondary battery may not be implemented.

In an embodiment, a nickel concentration of the lithium composite oxide particle may be 0.95 or less. When the nickel concentration exceeds 0.95, life-span properties may be deteriorated during repeated charging/discharging.

The term "content" or "concentration" used herein may indicate a molar ratio in the lithium composite oxide particle.

In exemplary embodiments, the lithium composite oxide particle may be represented by the following Chemical Formula 1.

[Chemical Formula 1] Li_{α}NiₓM_{y}O_{β}

In Chemical Formula 1, M may be at least one selected from of Co, Mn, Ti, Zr, Al and B, 0.7≤α≤1.2, 1.5≤β≤2.02, 0.8≤x≤0.95 and 0.95<x+y ≤1.1.

In some embodiments, the lithium composite oxide particle may include cobalt (Co) and/or manganese (Mn). For example, M in Chemical Formula 1 may be represented by Formula 2 below.

[Chemical Formula 2] CoᵤMnᵥN_{z}

In Chemical Formula 2, N may be at least one selected from Ti, Zr, Al and B, and may be 0.03≤u≤0.2, 0.02≤v≤0.2, and 0≤z≤0.1. Preferably, 0.03≤u≤0.1, and 0.02≤v≤0.1.

Manganese (Mn) may serve as a metal related to mechanical and electrical stability of the lithium secondary battery. For example, manganese may suppress or reduce defects such as ignition and short-circuit that may occur when the cathode is penetrated by an external object, and may increase life-span of the lithium secondary battery.

Cobalt (Co) may serve as a metal related to conductivity/resistance or power of the lithium secondary battery.

The lithium-titanium oxide may be reversibly formed on the surface of the lithium composite oxide particle. For example, the lithium-titanium oxide may at least partially cover the surface of the lithium composite oxide particle. The lithium-titanium oxide may form a reversible coating layer on the surface of the lithium composite oxide.

In example embodiments, the reversible coating layer may be formed as a separate layer with a boundary on the surface of the lithium composite oxide particle. A thickness of the coating layer may be from 90 nm to 200 nm.

In some embodiments, the lithium-titanium oxide may penetrate to a predetermined depth from the surface of the lithium composite oxide particle. A penetration depth may be, e.g., from 90 nm to 200 nm.

The cathode active material may include TiO₂ particles together with the lithium composite oxide particles. The TiO₂ particles may be included as independent particles together with the lithium composite oxide particles.

In exemplary embodiments, in a high voltage charging region of 4.1V or more and less than 4.3V, some of Ti components included in the TiO₂ particles may be transferred to the lithium composite oxide particles or may be reacted with the surface of the lithium composite oxide particle to form a reversible phase of the lithium-titanium oxide phase.

As described above, in the lithium composite oxide particles having the high-Ni composition with a nickel molar ratio of 0.8 or more, lithium residues or lithium impurities may be distributed in a relatively large amount on the particle surface.

For example, the lithium residues may cause a side reaction with an electrolyte in the high voltage charging region to deteriorate life-span propertied and chemical/mechanical stability of the secondary battery.

However, according to the above-described exemplary embodiments, the lithium residues may be converted into the reversible lithium-titanium oxide in the high voltage charging region. Accordingly, a passivation coating may be formed on the surface of the lithium composite oxide particle to improve the life-span properties.

Further, an additional conductive activity may be provided by the lithium-titanium oxide, so that mobility of lithium ions may be enhanced. Thus, capacity/power properties in the high voltage region may be improved together with the passivation of the cathode active material.

In some embodiments, the lithium-titanium oxide may be represented as LiₓTiO₂ (0<x≤0.6).

Ti has an ionic radius similar to that of Ni, Co, and Mn, which are transition metals, and has an oxidation number of +3 or +4 that is also similar to that of transition metals. Thus, Ti may be easily doped at vacant transition metal sites in a structure of lithium composite oxide particle.

Additionally, balancing of the oxidation number in the high-Ni lithium metal oxide may be implemented by replacing Mn⁴⁺ to maintain an oxidation number of Ni as +2. Thus, a battery capacity may be increased by Ni²⁺. Further, Ti may suppress a power reduction due to a cation mixing caused when Ni²⁺ occupies a Li+ site.

The oxide containing Ti may have enhanced electrical conductivity. Thus, a resistance increase due to a surface coating may be prevented in the surface of the lithium composite oxide particle having the Ti-containing oxide coated thereon, and power of the battery may be also improved.

In some embodiments, a content of the TiO₂ particles relative to a total weight of the lithium composite oxide particles may be from about 1,000 ppm to about 5,000 ppm. For example, if the content of the TiO₂ particles is less than about 1,000 ppm, the reversible phase of the lithium-titanium oxide may not be sufficiently formed. If the content of the TiO₂ particles exceeds about 5,000 ppm, the cathode activity of the lithium composite oxide particle may be reduced.

The reversible phase of the lithium-titanium oxide may not be generated or may substantially disappear in a low voltage charging region (e.g., a region less than 4.1V). Accordingly, high-capacity properties from the high-Ni composition may be sufficiently induced in the low voltage charging region. In the high voltage charging region, surface stability and life-span stability may be improved through the selective formation of the lithium-titanium oxide.

The reversible lithium-titanium oxide may be detected through a soft X-ray adsorption spectroscopy (sXAS).

In some embodiments, an integral peak intensity ratio expressed as PA/PA₀ may be from 1.5 to 2.0. PA represents an integral peak intensity in a range from 460 eV to 470 eV through the sXAS (Soft X-ray adsorption spectroscopy) of the cathode active material including the lithium-titanium oxide of the reversible phase and the lithium composite oxide particle. PA₀ represents an integral intensity of an sXAS from the cathode active material consisting of the lithium composite oxide particles having the same composition (not including titanium, titanium oxide or the lithium-titanium oxide) measured under the same condition.

Preferably, the integral peak intensity ratio may be from 1.6 to 1.95, more preferably from 1.7 to 1.9.

In some embodiments, the integral peak intensity in a range from 460 eV to 470 eV through the sXAS (Soft X-ray adsorption spectroscopy) of the cathode active material including the reversible lithium-titanium oxide may be from 10 to 14.

The passivation effect through the lithium-titanium oxide having the above-described reversible phase may be substantially implemented in the above-described integral peak intensity and/or integral peak intensity ratio.

In a preferable embodiment, the integral peak intensity of the sXAS in the range of 460 eV to 470 eV of the cathode active material including the reversible lithium-titanium oxide may be from 11 to 14, preferably from 12 to 14.

In some embodiments, the lithium composite oxide particles may each be a secondary particle formed by agglomeration of primary particles. An average particle diameter (D₅₀) (based on a cumulative volume particle size distribution) of the lithium composite oxide particles may be from about 6 µm to about 25 µm, preferably from about 10 µm to 16 µm.

In a preparation of the lithium composite oxide particles, e.g., active material metal salts may be prepared. The active material metal salts may include, e.g., a nickel salt, a manganese salt and a cobalt salt. Examples of the nickel salt include nickel sulfate, nickel hydroxide, nickel nitrate, nickel acetate, and a hydrate thereof. Examples of the manganese salt include manganese sulfate, manganese acetate, and a hydrate thereof. Examples of the cobalt salt include cobalt sulfate, cobalt nitrate, cobalt carbonate, and a hydrate thereof.

An aqueous solution may be prepared by mixing the metal salts of the active material with a precipitating agent and/or a chelating agent in a ratio satisfying the content or concentration ratio of each metal described with reference to the above Chemical Formula 1. The aqueous solution may be co-precipitated in a reactor to prepare a composite metal salt compound (e.g., an NCM precursor).

The precipitating agent may include an alkaline compound such as sodium hydroxide (NaOH), sodium carbonate (Na₂CO₃), etc. The chelating agent may include, e.g., aqueous ammonia (e.g., NH₄OH), ammonium carbonate (e.g., NH₃HCO₃), etc.

Thereafter, a lithium source may be mixed with the composite metal salt compound and may be reacted through a co-precipitation method to prepare the lithium composite oxide particles. The lithium source may include, e.g., lithium carbonate, lithium nitrate, lithium acetate, lithium oxide, lithium hydroxide, etc. These may be used alone or in combination thereof.

A heat treatment and a washing process may be further performed on the lithium composite oxide particles.

The lithium composite oxide particles may be mixed with the TiO₂ particles in the content range described above to prepare the cathode active material.

For example, the lithium composite oxide particles and TiO₂ may be dry-mixed while being stirred.

A cathode slurry may be prepared by mixing and stirring the cathode active material as described above in a solvent with a binder, a conductive material and/or a dispersive agent. The cathode slurry may be coated on a cathode current collector 110, and then dried and pressed to form a cathode 130.

The cathode current collector 110 may include stainless-steel, nickel, aluminum, titanium, copper or an alloy thereof. Preferably, aluminum or an alloy thereof may be used.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive material may be added to facilitate electron mobility between active material particles. For example, the conductive agent may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

In exemplary embodiments, the anode 140 may include an anode current collector 120 and an anode active material layer 125 formed by coating an anode active material on the anode current collector 120.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, a silicon (Si)-based compound, tin, etc., may be used.

The amorphous carbon may include a hard carbon, cokes, a mesocarbon microbead (MCMB) fired at a temperature of 1,500 °C or less, a mesophase pitch-based carbon fiber (MPCF), etc.

The crystalline carbon may include a graphite-based material such as natural graphite, graphitized cokes, graphitized MCMB, graphitized MPCF, etc.

The lithium alloy may further include aluminum, zinc, bismuth, cadmium, antimony, silicon, lead, tin, gallium, indium, etc.

In some embodiments, the anode 140 or the anode active material layer 125 may be combined with the cathode 130 or the cathode active material layer 115 to be stably operated within in the high voltage charging region in a full-cell structure.

For example, if a graphite-based active material is used as the anode active material, the anode 140 may be adjusted to have an oxidation/reduction potential of 0 V to 0.1V relative to Li/Li+. Accordingly, the high voltage charging region in the full-cell structure may be stably maintained.

In an embodiment, in the carbon-based active material, the oxidation/reduction potential or a lithium insertion potential may be adjusted to 0.1V or less by a nanopore structure formation, a surface modification, or the like.

In an embodiment, a lithium alloy-based anode active material may be employed so that the Li insertion potential may be substantially close to zero. In this case, the charging voltage of the full-cell at a level of, e.g., 4.2V or more and less than 4.3V may be implemented.

In an embodiment, a solvent and an additive of an electrolyte may be designed to suppress side reactions such as a decomposition of the electrolyte in the high voltage charging region.

The anode current collector 120 may include, e.g., gold, stainless steel, nickel, aluminum, titanium, copper or an alloy thereof, preferably may include copper or a copper alloy.

For example, an anode slurry may be prepared by mixing and stirring the anode active material with a binder, a conductive material and/or a dispersive agent in a solvent. The anode slurry may be coated on a surface of the anode current collector 120, and then dried and pressed to form the anode 140.

Materials substantially the same as or similar to those used in the cathode slurry may be used as the binder and the conductive material. In some embodiments, the binder for the anode may include, e.g., an aqueous binder such as styrene-butadiene rubber (SBR) for compatibility with the carbon-based active material, and may be used with a thickener such as carboxymethyl cellulose (CMC).

The separation layer 150 may be interposed between the cathode 130 and the anode 140 to form an electrode cell 160.

The separation layer 150 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 150 may be also formed from a non-woven fabric including a glass fiber with a high melting point, a polyethylene terephthalate fiber, or the like.

In some embodiments, an area and/or a volume of the anode 140 (e.g., a contact area with the separation layer 150) may be greater than that of the cathode 130. Thus, lithium ions generated from the cathode 130 may be easily transferred to the anode 140 without loss by, e.g., precipitation or sedimentation. Therefore, the enhancement of power and stability by the above-described active material may be effectively implemented.

In exemplary embodiments, a plurality of the electrode cells 160 may be stacked to form an electrode assembly having, e.g., a jelly roll shape. For example, the electrode assembly may be formed by winding, laminating or folding of the separation layer.

The electrode assembly may be accommodated together with an electrolyte in a case 170 to define a lithium secondary battery. In exemplary embodiments, a non-aqueous electrolyte may be used as the electrolyte.

For example, the non-aqueous electrolyte solution may include a lithium salt and an organic solvent. The lithium salt and may be represented by Li⁺X⁻. An anion of the lithium salt X⁻ may include, e.g., F, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

An electrode tab may be formed from each of the cathode current collector 110 and the anode current collector 120 included in each electrode cell, and may extend to one side of the case 170. The electrode tabs may be fused together with the one side of the case 170 to be connected to electrode leads that may be extended or exposed to and outside of the case 170.

The lithium secondary battery may be manufactured in, e.g., a cylindrical shape using a can, a square shape, a pouch shape or a coin shape.

The lithium secondary battery may be subjected to a formation treatment and a preliminary charging/discharging (e.g., a standard charge/discharge). For example, the reversible lithium-titanium oxide may be generated on the lithium composite oxide particles included in the cathode active material through the formation treatment and the preliminary charging/discharging.

The formation treatment and the preliminary charging/discharging may be performed, for example, at a voltage in a range of 2.5V to 4.2V.

The generated lithium-titanium oxide may disappear when the battery is not in an operation state. The lithium-titanium oxide may be re-generated only in the high voltage charging region of 4.1V or more and less than 4.3V during a main charging/discharging operation of the secondary battery, thereby improving life-span stability and capacity efficiency in the high voltage operation region.

In an embodiment, the high voltage charging region may correspond to a voltage of about 97% or more of a full charge (SOC100) voltage of the lithium secondary battery. The full charge voltage may refer to a minimum voltage at which the lithium secondary battery may be substantially fully charged (100% charge).

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Examples

### (1) Fabrication of cathode active material

A precursor aqueous solution was prepared by mixing NiSO₄, CoSO₄ and MnSO₄ in distilled water from which dissolved oxygen was removed by being bubbled with N₂ for 24 hours. The precursor aqueous solution was put into a reactor at 50°C and NaOH and NH₃H₂O were used as a precipitating agent and a chelating agent, respectively, to perform a co-precipitation reaction for 48 hours so that a nickel-cobalt-manganese hydroxide (a composite metal salt compound) having a particle diameter of about 10 µm to 20 µm was formed. The composite metal salt compound was dried at 80° C for 12 hours and then redried at 110° C for 12 hours.

Thereafter, lithium hydroxide was added so that a ratio between the composite metal salt compound and the lithium hydroxide was 1:1.05, followed by uniformly stirring and mixing for 5 minutes. The mixture was placed in a kiln, and the temperature was raised to 710°C at a heating rate of 2°C/min, and maintained at 710°C for 10 hours. Oxygen was passed continuously at a flow rate of 10 mL/min during the temperature raise and maintenance. After the annealing, natural cooling was performed to a room temperature, followed by pulverization and classification to obtain lithium composite oxide particles.

Contents of NiSO₄, CoSO₄ and MnSO₄ in the aqueous precursor solution were adjusted so that the lithium composite oxide particles had the composition shown in Table 1 below. Molar ratios of nickel, cobalt and manganese of the lithium composite oxide particle are shown in Table 1 below (e.g., a chemical formula of the lithium composite oxide particle of Example 1 was LiNi_{0.8}Co_{0.1}Mn_{0.1}O₂).

The lithium composite oxide particles were mixed with TiO₂ particles with the content shown in Table 1.

### (2) Fabrication of lithium secondary battery

The cathode active material, Denka Black as a conductive material and PVDF as a binder were mixed in a mass ratio of 92:5:3 to prepare a cathode mixture, and then the cathode mixture was coated, dried and pressed on an aluminum substrate to prepare a cathode. An electrode density of the cathode after the pressing was 3.5 g/cc or more.

An anode slurry was prepared by mixing 93 wt% of natural graphite (d002: 3.358Å) as an anode active material, 5 wt% of a flake type conductive material KS6, 1 wt% of SBR as a binder and 1 wt% of CMC as a thickener. The anode slurry was coated, dried and pressed on a copper substrate to form an anode.

The cathode and the anode obtained as described above were notched with a proper size and stacked, and a separator (polyethylene, thickness: 25µm) was interposed between the cathode and the anode to form an electrode assembly. Each tab portion of the cathode and the anode was welded. The welded cathode/separator/anode assembly was inserted in a pouch, and three sides of the pouch (e.g., except for an electrolyte injection side) were sealed. The tab portions were also included in sealed portions. An electrolyte was injected through the electrolyte injection side, and then the electrolyte injection side was also sealed. Subsequently, the above structure was impregnated for more than 12 hours to obtain a preliminary battery. The preliminary battery was pre-charged with a current (2.5A) corresponding to 0.25C for 36 minutes and degassed after 1 hour. The degassed preliminary battery was aged for at least 24 hours.

The electrolyte was prepared by preparing 1M LiPF₆ solution in a mixed solvent of EC/EMC/DEC (25/45/30; volume ratio), and then adding 1 wt% of vinylene carbonate, 0.5 wt% of 1,3-propensultone (PRS), and 0.5 wt% of lithium bis(oxalato) borate (LiBOB).

Formation charging and discharging (charging condition: CC-CV 0.2C 4.2V 0.05C CUT-OFF, discharge condition: CC 0.2C 2.5V CUT-OFF) was performed for the aged preliminary battery, and then a standard charging/discharging (charging condition: CC-CV 0.5 C 4.2V 0.05C CUT-OFF, discharging condition: CC 0.5C 2.5V CUT-OFF) was performed to obtain a lithium secondary battery.

A presence of the lithium-titanium oxide was shown in Table 1 by analyzing the cathode by an sXAS (Soft X-ray Absorption Spectroscopy) while increasing a charging voltage of the lithium secondary battery.

FIG. 2 is a graph showing the sXAS analysis of the cathode active material of Example 6.

For example, when the secondary battery of Example 6 charged and discharged at each voltage was disassembled, and then the cathode active material was analyzed by the sXAS, the graph of FIG. 2 was obtained.

Referring to FIG. 2, each of the cathode active materials charged at 4.1V and 4.2V showed enhanced peak intensities at about 461eV, 464eV and 467eV, respectively, and the formation of the reversible lithium-titanium oxide was confirmed.

**[Table 1]**

| No. | Ratio of transition metals (molar ratio; %) | | | Amount of titanium source (ppm) | Generation of LiₓTiO₂ peak | | | | |
|---|---|---|---|---|---|---|---|---|---|
| | Ni | Co | Mn | | 2.5V | 3.9V | 4.0V | 4.1V | 4.2V |
| Example 1 | 80 | 10 | 10 | 1000 | X | X | X | X | O |
| Example 2 | 80 | 10 | 10 | 5000 | X | X | X | X | O |
| Example 3 | 83 | 9 | 8 | 1000 | X | X | X | X | O |
| Example 4 | 83 | 9 | 8 | 5000 | X | X | X | X | O |
| Example 5 | 88 | 9 | 3 | 1000 | X | X | X | X | O |
| Example 6 | 88 | 9 | 3 | 5000 | X | X | X | O | O |
| Example 7 | 95 | 3 | 2 | 1000 | X | X | X | O | O |
| Example 8 | 95 | 3 | 2 | 5000 | X | X | X | O | O |
| Example 9 | 80 | 10 | 10 | 5500 | X | X | X | X | O |
| Example 10 | 80 | 10 | 10 | 6000 | X | X | X | O | O |
| Comparative Example 1 | 80 | 10 | 10 | - | X | X | X | X | X |
| Comparative Example 2 | 83 | 9 | 8 | - | X | X | X | X | X |
| Comparative Example 3 | 88 | 9 | 3 | - | X | X | X | X | X |
| Comparative Example 4 | 95 | 3 | 2 | - | X | X | X | X | X |
| Comparative Example 5 | 33 | 33 | 33 | - | X | X | X | X | X |
| Comparative Example 6 | 33 | 33 | 33 | 1000 | X | X | X | X | X |
| Comparative Example 7 | 33 | 33 | 33 | 5000 | X | X | X | X | X |
| Comparative Example 8 | 50 | 20 | 30 | 0 | X | X | X | X | X |
| Comparative Example 9 | 50 | 20 | 30 | 1000 | X | X | X | X | X |
| Comparative Example 10 | 50 | 20 | 30 | 5000 | X | X | X | X | X |
| Comparative Example 11 | 60 | 20 | 20 | 0 | X | X | X | X | X |
| Comparative Example 12 | 60 | 20 | 20 | 1000 | X | X | X | X | X |
| Comparative Example 13 | 60 | 20 | 20 | 5000 | X | X | X | X | X |
| Comparative Example 14 | 80 | 10 | 10 | 500 | X | X | X | X | X |

### Experimental Example

### (1) Evaluation on life-span property

The secondary batteries of Examples and Comparative Examples were charged and discharged under the conditions shown in Table 2 below at room temperature to measure a discharge capacity.

The charge/discharge cycle was repeated 500 times to evaluate a capacity retention rate as a percentage of the value obtained by dividing a discharge capacity at the 500th cycle by a discharge capacity at 1st cycle.

### (2) Measurement of initial capacity (coin half-cell)

Coin half-cells using Li foil as an anode and the cathode of Examples and Comparative Examples were prepared, and then charged (CC/CV 0.1C 4.3V 0.05C CUT-OFF) and discharged (CC 0.1C 3.0V CUT-OFF) by one cycle to measure an initial discharge capacity (CC: Constant Current, CV: Constant Voltage).

### (3) Measurement of initial efficiency Measurement (coin half-cell)

Charging (CC/CV 0.1C 4.3V 0.05C CUT-OFF) and discharging (CC 0.1C 3.0V CUT-OFF) were performed once for the coin half cell to measure charge and discharge capacities.

An initial efficiency was measured as a percentage value obtained by dividing the 0.1C discharging capacity measured above by the 0.1C charging capacity.

The evaluation results are shown in Table 2 below.

**[Table 2]**

| No. | 500 cycle capacity retention at room temperature | | | Initial discharge capacity (mAh/g) | Initial Efficiency (%) |
|---|---|---|---|---|---|
| | SOC 0-50 (charge 3.9V/ discharge 2.5V) | SOC 0-90 (charge 4.1V/ discharge 2.5V) | SOC 0-100 (charge 4.2V/ discharge 2.5V) | | |
| Example 1 | 97.5 | 90.4 | 84.9 | 203 | 91 |
| Example 2 | 97.5 | 90.0 | 90.3 | 204 | 92 |
| Example 3 | 97.7 | 89.9 | 83.2 | 207 | 90 |
| Example 4 | 97.2 | 90.1 | 89.0 | 209 | 91 |
| Example 5 | 96.8 | 89.5 | 78.9 | 214 | 90 |
| Example 6 | 97.1 | 92.8 | 89.3 | 216 | 91 |
| Example 7 | 96.0 | 73.9 | 70.3 | 226 | 89 |
| Example 8 | 95.9 | 89.4 | 84.2 | 226 | 89 |
| Example 9 | 97.4 | 89.9 | 74.8 | 200 | 89 |
| Example 10 | 97.3 | 90.0 | 74.9 | 199 | 88 |
| Comparative Example 1 | 97.7 | 90.1 | 75.0 | 200 | 89 |
| Comparative Example 2 | 97.6 | 90.3 | 72.8 | 205 | 89 |
| Comparative Example 3 | 97.3 | 81.0 | 61.1 | 210 | 88 |
| Comparative Example 4 | 95.7 | 65.1 | 53.0 | 220 | 86 |
| Comparative Example 5 | 99.1 | 95.8 | 92.7 | 160 | 91 |
| Comparative Example 6 | 99.0 | 96.2 | 93.1 | 160 | 92 |
| Comparative Example 7 | 99.2 | 95.9 | 93.2 | 161 | 91 |
| Comparative Example 8 | 97.7 | 96.1 | 92.1 | 172 | 90 |
| Comparative Example 9 | 97.8 | 95.8 | 92.1 | 171 | 91 |
| Comparative Example 10 | 97.7 | 96.3 | 91.8 | 172 | 91 |
| Comparative Example 11 | 98.2 | 96.0 | 92.3 | 182 | 91 |
| Comparative Example 12 | 98.0 | 95.7 | 92.5 | 180 | 90 |
| Comparative Example 13 | 98.2 | 95.9 | 92.1 | 182 | 90 |
| Comparative Example 14 | 97.4 | 90.2 | 75.2 | 199 | 89 |

Referring to Table 2, in the case of Examples including the cathode active material in which the lithium-titanium oxide phase was formed in the above-described high voltage charging region, improved life-span properties were provided even in a high-Ni composition while maintaining high initial capacity and efficiency.

### (4) Measurement of sXAS integral peak intensity and Calculation of integral peak intensity ratio

An area (integral intensity) of an sXAS peak of LiₓTiO₂ was measured in a range of 460-470 eV at a charging voltage of 4.2V for the cathode active material layers of Examples and Comparative Examples using a soft x-ray beamline equipment.

Additionally, an integral peak intensity ratio of the sXAS peak integral intensity measured from the cathode active materials of Examples and Comparative Examples in which the titanium source described in Table 1 was used relative to the sXAS peak integral intensity measured from Comparative Examples (no titanium source) consisting of the same lithium composite oxide particles.

Specifically, the integral peak intensity ratios of Examples 1, 2, 9, 10 and Comparative Example 14 were calculated compared to the integral peak intensity of Comparative Example 1. The integral peak intensity ratios of Examples 3 and 4 were calculated compared to the integral peak intensity of Comparative Example 2. The integral peak intensity ratios of Examples 5 and 6 were calculated compared to the integral peak intensity of Comparative Example 3. The integral peak intensity ratios of Examples 7 and 8 were calculated compared to the integral peak intensity of Comparative Example 4.

The integral peak intensity ratios of Comparative Example 6 and Comparative Example 7 were calculated compared to the integral peak intensity of Comparative Example 5. The integral peak intensity ratios of Comparative Example 9 and Comparative Example 10 were calculated compared to the integral peak intensity of Comparative Example 8. The integral peak intensity ratios of Comparative Example 12 and Comparative Example 13 were calculated compared to the integral peak intensity of Comparative Example 11.

The measurement results are shown in Table 3 below.

**[Table 3]**

| No. | sXAS peak integral intensity (4.2V charging voltage, 460-470eV) | Integral peak intensity ratio relative to corresponding Comparative Example |
|---|---|---|
| Example 1 | 12.50 | 1.78 |
| Example 2 | 12.65 | 1.80 |
| Example 3 | 12.88 | 1.81 |
| Example 4 | 12.95 | 1.82 |
| Example 5 | 13.19 | 1.90 |
| Example 6 | 13.22 | 1.90 |
| Example 7 | 13.23 | 1.83 |
| Example 8 | 13.51 | 1.87 |
| Example 9 | 12.66 | 1.80 |
| Example 10 | 12.67 | 1.81 |
| Comparative Example 1 | 7.02 | - |
| Comparative Example 2 | 7.10 | - |
| Comparative Example 3 | 6.95 | - |
| Comparative Example 4 | 7.22 | - |
| Comparative Example 5 | 6.89 | - |
| Comparative Example 6 | 7.65 | 1.11 |
| Comparative Example 7 | 9.12 | 1.32 |
| Comparative Example 8 | 7.07 | - |
| Comparative Example 9 | 8.10 | 1.15 |
| Comparative Example 10 | 9.43 | 1.34 |
| Comparative Example 11 | 7.11 | - |
| Comparative Example 12 | 8.55 | 1.20 |
| Comparative Example 13 | 9.36 | 1.32 |
| Comparative Example 14 | 7.89 | 1.12 |

Referring to Table 3, peaks of the reversible phase of the lithium-titanium oxide was detected at the charging voltage of 4.2 V. As shown in Table 3, the sXAS peak integral intensity ratios in a range of 1.5 to 2.0 were obtained from high-Ni cathode active material having a molar ratio of Ni of 0.8 or more.

## Claims

1. A lithium secondary battery, comprising:
a cathode comprising a cathode active material, wherein the cathode active material comprises a lithium composite oxide particle having a nickel molar ratio of 0.8 or more among elements other than lithium and oxygen, and a reversible lithium-titanium oxide selectively present in a charging region of 4.1 V or more and less than 4.3 V; and
an anode facing the cathode.

2. The lithium secondary battery of claim 1, wherein the reversible lithium-titanium oxide is represented by LiₓTiO₂ (0<x≤0.6).

3. The lithium secondary battery of claim 1, wherein the cathode active material further comprises TiO₂ particles.

4. The lithium secondary battery according to claim 3, wherein a content of the TiO₂ particles is from 1,000 ppm to 5,000 ppm based on a total weight of the lithium composite oxide particle.

5. The lithium secondary battery of claim 1, wherein the lithium composite oxide particle is represented by Chemical Formula 1:
[Chemical Formula 1] Li_{α}NiₓM_{y}O_{β}
wherein, in Chemical Formula 1, M is at least one selected from the group consisting of Co, Mn, Ti, Zr, Al and B, 0.7≤α≤1.2, 1.5≤β≤2.02, 0.8≤x≤0.95, and 0.95<x+y ≤1.1.

6. The lithium secondary battery of claim 1, wherein the reversible lithium-titanium oxide is formed on a surface of the lithium composite oxide particle in the charging region.

7. The lithium secondary battery of claim 6, wherein the reversible lithium-titanium oxide is not present at a voltage less than 4.1V.

8. The lithium secondary battery of claim 1, wherein the lithium composite oxide particle contains nickel, cobalt and manganese, and a molar ratio of nickel among nickel, cobalt and manganese is 0.8 or more.

9. The lithium secondary battery of claim 1, wherein an integral peak intensity ratio expressed as PA/PA₀ is from 1.5 to 2.0,
wherein PA represents an integral peak intensity in a range from 460 eV to 470 eV by an sXAS (Soft X-ray adsorption spectroscopy) of the cathode active material including the reversible lithium-titanium oxide and the lithium composite oxide particle, and
PA₀ represents an integral peak intensity by an sXAS of a cathode active material that consists of the lithium composite oxide particle having the same composition used when measuring PA and does not include a titanium source measured under the same condition used when measuring PA.

10. The lithium secondary battery of claim 9, wherein the integral peak intensity ratio is from 1.6 to 1.95.

11. The lithium secondary battery of claim 1, wherein the integral peak intensity in the range from 460 eV to 470 eV by the sXAS of the cathode active material including the reversible lithium-titanium oxide is from 10 to 14.
